# EUROPEAN PATENT APPLICATION

(11) **EP 4 729 288 A1**
(43) Date of publication of application: **22.04.2026**
(21) Application number: 24823346.2
(22) Date of filing: 10.06.2024
(51) Int. Cl.: B32B 7/022, B32B 27/00, B32B 27/32, C08J 7/04

(54) **MULTILAYER FILM AND METHOD FOR PRODUCING SAME**

(30) Priority: 13.06.2023 JP 2023096638; 22.02.2024 JP 2024025137
(71) Applicant: Unitika Ltd., Osaka-shi, Osaka 541-8566 (JP)
(72) Inventor: TSUBOTA Masayuki, Uji-shi, Kyoto 611-0021 (JP); HATAO Shihori, Uji-shi, Kyoto 611-0021 (JP); MORIMOTO Ryohei, Uji-shi, Kyoto 611-0021 (JP); TAKAHASHI Naho, Uji-shi, Kyoto 611-0021 (JP); ASHIHARA Kumi, Uji-shi, Kyoto 611-0021 (JP)
(74) Representative: KATZAROV S.A.
(86) International application number: PCT/JP2024/021072
(87) International publication number: WO 2024/257730

(57) **Abstract**

A laminated film including: a base film; and a resin layer provided on at least one surface of the base film, wherein a base film surface on which the resin layer is provided is substantially free of particles, the resin layer contains an acid-modified polyolefin resin (A) and a crosslinking agent (C), and a developed interfacial area ratio (Sdr) and a maximum height (Sz) in a surface of the resin layer measured by a non-contact surface profile measuring apparatus are 0.025 to 0.304% and 0.01 to 0.50 µm, respectively.

## Description

### Technical Field

The present invention relates to a laminated film and a method of manufacturing the same.

### Background Art

In recent years, with the miniaturization and high integration of electronic information devices, process films used in the manufacture of electronic information devices are required to have excellent flatness.

Patent Literature 1 discloses a slippable film suitable as a release material, which has excellent flatness of the resin layer and excellent slippability during film formation and processing.

The base film constituting the slippable film disclosed in Patent Literature 1 contains particles to impart slippability. However, since the resin layer is formed on the base film containing particles, the morphology of the particles may appear on the surface of the resin layer and be transferred to the adherend. Further improvements are needed to meet the high level of flatness required for the miniaturization of electronic information devices.

In the laminated film where a resin layer is formed on the base film, reducing the content of particles in the base film or decreasing the particle diameter to enhance the flatness of the resin layer surface tends to reduce the slippability of the base film surface. On the one hand, increasing the particle content in the base film to enhance the slippability of the base film surface tends to reduce the flatness of the resin layer surface. Thus, it has been difficult to obtain a laminated film that achieves both flatness and slippability, which are two conflicting properties, at a high level.

### Citation List

### Patent Literature

Patent Literature 1: JP 2012-020429 A

### Summary of Invention

### Technical Problem

Considering these issues, the present invention aims to provide a laminated film wherein the resin layer provided on the base film exhibits good releasability against adherends and does not transfer to the adherend due to its excellent flatness, and the laminated film has superior slippability during film formation and processing.

### Solution to Problem

The present inventors have conducted intensive studies to solve the problems. As a result, the present inventors have found that, by using a liquid material for resin layer formation containing specific compounds to form a resin layer on a base film surface that is substantially free of particles, it is possible to obtain a laminated film that achieves both flatness and slippability at a high level, with good releasability, and have completed the present invention.

In the laminated film according to the present invention including a base film and a resin layer provided on at least one surface of the base film, a base film surface on which the resin layer is provided is substantially free of particles, the resin layer contains an acid-modified polyolefin resin (A) and a crosslinking agent (C), and a developed interfacial area ratio (Sdr) and a maximum height (Sz) in a surface of the resin layer measured by a non-contact surface profile measuring apparatus are 0.025 to 0.304% and 0.01 to 0.50 µm, respectively.

According to the laminated film of the present invention, it is preferable that the olefin component of the acid-modified polyolefin resin (A) contains propylene or 1-octene.

According to the laminated film of the present invention, it is preferable that the content of propylene in the olefin component is 70% by mass or more.

According to the laminated film of the present invention, it is preferable that the content of 1-octene in the olefin component is 15% by mass or more.

According to the laminated film of the present invention, it is preferable that the peel strength between the resin layer and an epoxy prepreg is 0.5 N/cm or less.

The method of manufacturing the laminated film of the present invention is a method of manufacturing the aforementioned laminated film, the method including:
applying a liquid material for resin layer formation onto a base film, wherein the liquid material contains an acid-modified polyolefin resin (A), a crosslinking agent (C), and at least one compound (D) selected from the group consisting of an amphiphilic oligomer, acetylene glycol, and an ethylene oxide adduct of acetylene glycol, and has a liquid temperature of 20 to 40°C; and
drying and stretching the base film to which the liquid material for resin layer formation has been applied.

According to the method of manufacturing the laminated film of the present invention, it is preferable that a content of the compound (D) in the liquid material for resin layer formation is 2 to 50 parts by mass based on 100 parts by mass of the acid-modified polyolefin resin (A).

### Advantageous Effects of Invention

The laminated film of the present invention has a resin layer side surface that is excellent in flatness, possesses good releasability, and has suitable slippability for film formation and processing. Thus, it can be preferably used as a release film for various applications such as a protective film application for double-sided tape and adhesive materials, a protective or process material application in the production of parts for liquid crystal displays, printed circuit boards, or the like, and an application for forming a sheet-like structure such as an ion exchange membrane, a ceramic green sheet, or a heat-dissipation sheet.

### Description of Embodiments

Hereinafter, the present invention will be described in detail.

The laminated film of the present invention includes a resin layer provided on at least one base film surface that is substantially free of particles. The resin layer contains an acid-modified polyolefin resin (A) and a crosslinking agent (C), and a developed interfacial area ratio (Sdr) in a surface of the resin layer measured by a non-contact surface profile measuring apparatus is 0.025 to 0.304%, and a maximum height (Sz) in a surface of the resin layer measured by a non-contact surface profile measuring apparatus is 0.01 to 0.50 µm.

### <Base Film>

Examples of the base film constituting the laminated film of the present invention include a film of polyester such as polyethylene terephthalate (PET), polybutylene terephthalate (PBT), polyethylene naphthalate (PEN), poly(1,4-cyclohexylenedimethylene terephthalate), or polylactic acid (PLA) film; a film of polyolefin such as polypropylene; a polystyrene film; a film of polyamide such as a polyamide 6, poly-p-xylylene adipamide (MXD6 nylon), polyamide 66, polyamide 46, polyamide 4T, polyamide 6T, polyamide 9T, polyamide 10T, polyamide 11T, polyamide 12T, or polyamide 6I; a polycarbonate film; a polyacrylonitrile film; a polyimide film, and a film of multilayer structures thereof (for example, polyamide 6/MXD6 nylon/polyamide 6, polyamide 6/ethylene-vinyl alcohol copolymer/polyamide 6, polyamide 6/6T, polyamide 6/6I, polyamide 6/6T/6I) or blends thereof, with polyester films and polyamide films having mechanical strength and dimensional stability being preferred. Here, T represents terephthalic acid, and I represents isophthalic acid. Among them, polyethylene terephthalate film is preferred for the base film from the viewpoint of adhesion with the resin layer, and semi-aromatic polyamide film is preferred from the viewpoints of the heat resistance and adhesion with the resin layer, with polyamide 9T film and polyamide 10T film being particularly preferred.

### (Polyester Resin)

The polymerization method of the polyester resin that constitutes the base film is not particularly limited, and examples thereof include the transesterification method and the direct polymerization method. Examples of catalysts for transesterification include compounds such as oxides and acetates of Mg, Mn, Zn, Ca, Li, Ti, and the like. Examples of catalysts for polycondensation include compounds such as oxides and acetates of Sb, Ti, Ge, and the like.

Since the polyester resin after polymerization contains monomers, oligomers, and by-products such as acetaldehyde, it may undergo solid-state polymerization at a temperature of 200°C or higher under reduced pressure or an inert gas flow.

The intrinsic viscosity of the polyester resin is preferably 0.55 to 0.80, more preferably 0.60 to 0.75. If the intrinsic viscosity of the polyester resin is below the range, the film is prone to breakage during film formation, making stable film formation difficult, and the strength of the resulting film is also low. On the other hand, if the intrinsic viscosity of the polyester resin exceeds the aforementioned range, shear heating during resin melt extrusion increases in the film production process, resulting in higher load on the extruder, which forces a reduction in production speed and makes film-thickness control difficult, thereby lowering film productivity. Furthermore, the obtained film tends to exhibit increased thermal decomposition and gel formation, leading to more surface defects, foreign matter, and coarse surface protrusions. Moreover, materials with excessively high intrinsic viscosity result in longer polymerization times and processes, becoming a factor that drives up costs.

### (Semi-Aromatic Polyamide Resin)

The semi-aromatic polyamide resin that constitutes the base film is composed of a dicarboxylic acid component and a diamine component, and contains an aromatic component in either the dicarboxylic acid component or the diamine component. It is preferable that the semi-aromatic polyamide resin is composed of an aromatic dicarboxylic acid component and an aliphatic diamine component.

### (Manufacturing of Base Film)

Next, the method of manufacturing the base film will be described.

First, a sufficiently dried resin is supplied to an extruder, melted at or above the temperature at which it is sufficiently plasticized and exhibits flowability, and passed through a selected filter if necessary. The molten polymer is then discharged in a sheet form from a flat die such as a T-die or I-die, and brought into close contact with the cooling surface of a moving cooling body such as a cooling roll or steel belt, whose temperature is controlled at or below the glass transition temperature (Tg), to obtain an unstretched film. As methods for cooling and solidifying a molten polymer discharged in a sheet form by bringing it into close contact with a moving cooling body, methods such as the air knife casting method, electrostatic application method, and vacuum chamber method can be used.

The obtained unstretched film is preferably stretched from the viewpoint of improving mechanical properties and heat resistance, that is, it is either uniaxially oriented by the uniaxial stretching method, or biaxially oriented by the biaxial stretching method. The biaxial stretching method is not particularly limited, and methods such as flat sequential biaxial stretching method, flat simultaneous biaxial stretching method, and tubular method can be used.

Among them, in the stretching of polyester film, the flat sequential biaxial stretching method is optimal, and in the stretching of semi-aromatic polyamide film, the flat simultaneous biaxial stretching method is optimal.

In the uniaxial stretching method of polyester film, the unstretched film is stretched in the machine direction or transverse direction within a temperature range from the resin's glass transition temperature (Tg) to Tg + 50°C, to achieve a stretching ratio of about 2 to 6 times.

In the simultaneous biaxial stretching method, the unstretched film is biaxially stretched in both the machine direction and transverse direction at a temperature in the range of Tg to Tg + 50°C for the resin to achieve a stretch ratio of approximately 2 to 4 times in each direction. Before guiding it to the simultaneous biaxial stretching device, a preliminary longitudinal stretching of up to about 1.2 times may be applied to the unstretched film.

In the sequential biaxial stretching method, the unstretched film is heated using heated rolls, infrared rays, or the like, and stretched in the machine direction to obtain a longitudinally stretched film. The longitudinal stretching is preferably performed by utilizing the peripheral speed difference between two or more rolls, at a temperature in the range of Tg to Tg + 40°C for the polyester with a stretching ratio of 2.5 to 4.0 times. The longitudinally stretched film is subsequently and continuously subjected to sequential processes of transverse stretching in the transverse direction, heat setting, and thermal relaxation to obtain a biaxial oriented film. The transverse stretching is preferably initiated at a temperature in the range of Tg to Tg + 40°C of the resin, and the maximum temperature should be 40 to 100°C lower than the melting point (Tm) of the resin. The transverse stretching ratio is ultimately dependent on the required properties of the final film and is adjusted accordingly, but it is preferably 3.5 times or more, more preferably 3.8 times or more, and further preferably 4.0 times or more. After stretching in the machine direction and transverse direction, further stretching in the machine and/or transverse direction can also enhance the elastic modulus and dimensional stability of the film.

Following the stretching, it is preferable to perform heat setting process for a few seconds at a temperature of 10 to 50°C lower than the Tm of the resin, while simultaneously relaxing the film in the transverse direction by 1 to 10% during the heat setting process. After the heat setting process, the film is cooled to Tg or below to obtain a biaxially stretched film.

In the stretching of semi-aromatic polyamide film, as described above, due to the good film thickness accuracy and uniform physical properties in the transverse direction of the film, the flat simultaneous biaxial stretching method is optimal. For the stretching apparatus used in the flat simultaneous biaxial stretching method, a screw-type tenter, a pantograph-type tenter, or a linear motor-driven clip-type tenter can be used.

The stretching ratio is preferably in the range of 1.5 to 10 times, more preferably 2 to 5 times, in both the machine and transverse directions to achieve a semi-aromatic polyamide film with excellent heat resistance and mechanical strength.

The stretching speed is preferably such that the stretching strain rate in both the machine and transverse directions exceeds 400%/min, more preferably is 800 to 12000%/min, and further preferably is 1200 to 6000%/min. If the strain rate is 400%/min or less, crystals may grow during stretching, causing the film to break. Conversely, if the strain rate is too high, the unstretched sheet may not be able to keep up with the deformation, potentially resulting in breakage.

The stretching temperature is preferably at or above Tg of the semi-aromatic polyamide resin, and more preferably above Tg and not higher than (Tg + 50)°C. If the stretching temperature is below Tg, the film is prone to breaking, making stable production difficult. Conversely, if it exceeds (Tg + 50)°C, stretching unevenness may occur.

After stretching as described above, it is preferable to perform a heat setting process on the semi-aromatic polyamide film as needed while the film is still gripped by the clips used during the stretching. A preferable heat setting process temperature is 250 to (Tm - 5)°C, and more preferably 280 to (Tm - 10)°C. If the heat setting process temperature is below 250°C, the resin layer containing an acid-modified olefin resin, which is provided on the semi-aromatic polyamide film before stretching, will undergo insufficient curing reaction, resulting in decreased releasability.

Furthermore, after performing the heat setting process, it is preferable to perform a relaxation process of 1 to 10%, more preferably 3 to 7%, on the film as needed while the film is still gripped by the clips. The film can achieve sufficient dimensional stability by undergoing the relaxation process.

After performing the heat setting or relaxation process as desired, the film is cooled and wound onto a winding roll to obtain a semi-aromatic polyamide resin stretched film roll. The obtained semi-aromatic polyamide resin stretched film roll can be slit to the desired width.

### (Base Film of Multilayer Structure)

The aforementioned manufacturing method yields a base film of a single-layer structure, but the base film may also be of a multilayer structure composed of two or more laminated layers.

The multilayer film can be produced in the manufacturing method by separately melting the resins constituting each layer, extruding them using a multilayer die, and then laminating and fusing them before solidification, followed by biaxial stretching and heat setting, or by separately melting and extruding two or more resins, forming them into films, and then laminating and fusing them either in an unstretched state or after stretching. Due to the simplicity of the process, it is preferable to use multilayer dice and perform lamination and fusion before solidification.

In the present invention, the base film can be a single-layer structure or a multilayer structure (for example, two types in two layers, two types in three layers, three types in three layers, or four or more layers), but from the viewpoint of being able to control the surface roughness on each side and improve handling properties such as windability, a multilayer structure is preferred. A structure of two types in two or three layers is more preferred, and a structure of two types in two layers is further preferred. The structure of two types in two layers refers to a two-layer structure manufactured using two types of layer-forming materials, where these two layers differ in composition (for example, in terms of particle content). The structure of two types in three layers refers to a three-layer structure manufactured using two types of layer-forming materials, where the two outermost layers and the intermediate layer differ in composition (for example, in terms of particle content). The structure of three types in three layers refers to a three-layer structure manufactured using three types of layer-forming materials, where these three layers differ in composition (for example, in terms of particle content).

### (Particles)

The base film may contain particles, mainly to impart slippability and prevent scratches during various processes. However, in the base film constituting the laminated film of the present invention, the surface side on which the resin layer is laminated is required to be substantially free of particles. Since the surface of the base film on which the resin layer is formed is substantially free of particles, the resin layer surface where a resin layer containing a specific acid-modified polyolefin resin (A) and a crosslinking agent (C) described later is formed has excellent flatness. On the other hand, each layer of the base film, other than the surface forming the resin layer, may contain particles to an extent that does not impair the effects of the present invention. Note that "substantially free of particles" means that the surface of the base film on which the resin layer is formed is manufactured without adding particles. Accordingly, it is particularly preferable that the particle content of the base film surface on which the resin layer is formed is zero. However, as long as it does not impair the effects of the present invention, the content may be about 0.001% by mass or less, and more preferably about 0.0005% by mass or less.

The type of the particles contained in the base film is not particularly limited as long as they are particles that can impart slippability. Specific examples thereof include inorganic particles such as silica, calcium carbonate, magnesium carbonate, barium carbonate, calcium sulfate, calcium phosphate, magnesium phosphate, kaolin, aluminum oxide, and titanium oxide, and organic particles such as acrylic resin, styrene resin, urea resin, phenol resin, epoxy resin, and benzoguanamine resin. Furthermore, it is also possible to use precipitated particles formed by partial precipitation and fine dispersion of metal compounds such as catalysts during the manufacturing process of the resin constituting the base.

Moreover, the morphology of the particles is not particularly limited and may be any of spherical, blocky, rod-like, plate-like, or the like.

There are no specific limitations on the hardness, specific gravity, color, or the like of the particles. Particles may be used in combination of two or more types as needed.

The average particle diameter is preferably 5 µm or less, and more preferably in the range of 0.01 to 3 µm. If the average particle diameter exceeds 5 µm, the surface roughness of the base film becomes too coarse, which may affect the surface profile of the molded surface to be transferred, for example, when used in transfer applications.

The content of particles in the base film is usually 5% by mass or less, preferably in the range of 0.0003 to 3% by mass. If the particle content exceeds 5% by mass, film breakage may occur more easily during the stretching process in the manufacturing of the laminated film of the present invention.

The method of adding particles is not particularly limited and conventional methods can be employed. For example, the particles can be added at any stage of the manufacturing process of the resin that constitutes each layer. When the particles are added during the manufacturing process of polyester, it is preferable to add the particles after the completion of esterification or transesterification reactions.

### (Additives)

The base film may contain additives such as an antioxidant, a heat stabilizer, a UV absorber, an antistatic agent, and a pinning agent, as required. Examples of the antioxidant include a hindered phenol-based compound and a hindered amine-based compound. Examples of the heat stabilizer include a phosphorus compound. Examples of the UV absorber include a benzophenone-based compound and a benzotriazole-based compound.

### (Thickness)

The thickness of the base film is not particularly limited as long as it is within the range that allows film formation. However, from the viewpoints of mechanical strength, handling properties, and productivity, the thickness is usually 5 to 300 µm, preferably 10 to 150 µm.

### <Resin layer>

The laminated film of the present invention includes a resin layer provided on at least one surface of a layer of the base film, where the layer is substantially free of particles. As a resin component constituting the resin layer, an acid-modified polyolefin resin (A) is used from the viewpoint of imparting good releasability to the resin layer. The resin layer is also required to contain a crosslinking agent (C). The resin layer is formed by applying a liquid material for resin layer formation that contains an acid-modified polyolefin resin (A), a crosslinking agent (C), and at least one compound (D) selected from the group consisting of an amphiphilic oligomer, acetylene glycol, and an ethylene oxide adduct of acetylene glycol.

### (Acid-Modified Polyolefin Resin (A))

The acid-modified polyolefin resin is a resin composed mainly of an olefin component and modified by an acid-modifying component. The resin layer may contain two or more acid-modified polyolefin resins (A).

The olefin component constituting the acid-modified polyolefin resin can be at least one selected from ethylene, propylene, 1-butene, 1-pentene, 1-hexene, 1-octene, and 1-nonene.

From the viewpoint of releasability from acrylic adhesives, the olefin component preferably contains ethylene. From the viewpoints of further improving the releasability from acrylic adhesives, the ethylene content in the olefin component is preferably 50% by mass or more, more preferably 80% by mass or more, and further preferably 90% by mass or more.

From the viewpoint of releasability from epoxy resins, the olefin component preferably contains propylene. From the viewpoints of further improving the releasability from epoxy resins, the propylene content in the olefin component is preferably 50% by mass or more, more preferably 60% by mass or more, further preferably 70% by mass or more, even more preferably 80% by mass or more, still more preferably 90% by mass or more, and most preferably 95% by mass or more.

From the viewpoint of improving slippability, it is preferable that the olefin component contains an olefin component having 6 or more carbons, such as 1-hexene, 1-octene, or 1-nonene, and it is particularly preferable that it contains 1-octene. From the viewpoints of further improving slippability, the content of 1-octene in the olefin component is preferably 15% by mass or more, and more preferably 25% by mass or more.

From the viewpoints of improving flatness, which is an object of the present invention, the olefin component constituting the acid-modified polyolefin resin preferably contains 1-butene and 1-pentene in an amount of 20% by mass or less, more preferably 15% by mass or less, and further preferably 10% by mass or less, based on the polyolefin component, and most preferably does not contain 1-butene or 1-pentene at all.

Examples of the acid-modified component that constitutes the acid-modified polyolefin resin include unsaturated carboxylic acid components. Specific examples thereof include acrylic acid, methacrylic acid, maleic acid, maleic anhydride, itaconic acid, itaconic anhydride, and fumaric acid, crotonic acid, as well as half-esters and half-amides of unsaturated dicarboxylic acids. Among them, in the aqueous dispersion of the resin described later, acrylic acid, methacrylic acid, maleic acid, and maleic anhydride are preferred for stably dispersing the resin, with acrylic acid, methacrylic acid, and maleic anhydride being particularly preferred. Two or more types of these acid-modifying components may be included in the acid-modified polyolefin resin.

The proportion of the acid-modified component in the acid-modified polyolefin resin is preferably 1 to 10% by mass, and more preferably 2 to 9% by mass. If the acid-modified component is less than 1% by mass, the proportion of polar groups in the acid-modified polyolefin resin contained in the resin layer becomes low. As a result, the resin layer tends not to achieve sufficient adhesion to the base film, and may contaminate the adherend released from the resin layer. Furthermore, in the aqueous dispersion of the resin described later, there tends to be difficulty in achieving stable dispersion of the resin. On the other hand, if the proportion of acid-modified component exceeds 10% by mass, the proportion of polar groups increases. As a result, while the adhesion between the resin layer and the base film becomes sufficient, the adhesion between the resin layer and the adherend also increases simultaneously, leading to a tendency for the releasability from the adherend to decrease.

Furthermore, to further improve adhesion with the base film, the acid-modified polyolefin resin may contain an ethylenically unsaturated component that contains an oxygen atom in the side chain.

Examples of the ethylenically unsaturated component that contains an oxygen atom in the side chain include esterification products of (meth)acrylic acid with an alcohol having 1 to 30 carbon atoms, and among them, from the viewpoint of availability, esterification products of (meth)acrylic acid with an alcohol having 1 to 20 carbon atoms are preferred. Specific examples of such compounds include methyl (meth)acrylate, ethyl (meth)acrylate, propyl (meth)acrylate, butyl (meth)acrylate, hexyl (meth)acrylate, octyl (meth)acrylate, decyl (meth)acrylate, lauryl (meth)acrylate, dodecyl (meth)acrylate, and stearyl (meth) acrylate. A mixture of these may also be used. Among these, from the viewpoint of adhesion to polyester film, methyl (meth)acrylate, ethyl (meth)acrylate, butyl (meth)acrylate, hexyl acrylate, and octyl acrylate are more preferred, with ethyl acrylate and butyl acrylate being further preferred, and ethyl acrylate being particularly preferred. The term "(meth)acrylic acid ..." refers to "acrylic acid ..." or "methacrylic acid ...".

The ethylenically unsaturated component that contains an oxygen atom in the side chain, like the acid-modified component, has a polar group in a molecule. Thus, by containing an ethylenically unsaturated component that contains an oxygen atom in the side chain in the acid-modified polyolefin resin, the resin layer exhibits improved adhesion to the base film. However, if the amount of ethylenically unsaturated components containing an oxygen atom in the side chain is too high, the properties of the olefin-derived resin are lost, and the releasability of the resin layer from the adherend may be reduced. The proportion of ethylenically unsaturated component that contains an oxygen atom in the side chain is preferably 1 to 40% by mass, more preferably 2 to 35% by mass, further preferably 3 to 30% by mass, and particularly preferably 6 to 18% by mass, based on the acid-modified polyolefin resin.

It should be noted that, even when using an acid-modified polyolefin resin containing an ethylenically unsaturated component that contains an oxygen atom in the side chain, it does not impair the releasability of the resin layer apart from the adhesion to the base film.

In the acid-modified polyolefin resin, other monomers may also be copolymerized in small amounts. Examples of the other monomers include dienes, (meth)acrylonitrile, vinyl halides, vinylidene halides, carbon monoxide, and sulfur dioxide.

Each component that constitutes the acid-modified polyolefin resin only needs to be copolymerized within the acid-modified polyolefin resin, and the state of copolymerization is not limited. Examples of the copolymerization state include random copolymerization, block copolymerization, and graft copolymerization (graft modification).

The melting point of the acid-modified polyolefin resin is preferably between 80°C and 200°C, and more preferably between 90°C and 150°C. If the melting point of the acid-modified polyolefin resin exceeds 200°C, high-temperature process may be required to form a resin layer on the surface of the base film. On the other hand, if the melting point of the acid-modified polyolefin resin is below 80°C, the releasability of the resin layer may be reduced.

Examples of the acid-modified polyolefin resin that can be used in the present invention include products such as Bondine series manufactured by Arkema S.A., Nucrel series manufactured by Mitsui DuPont Polychemicals Co., Ltd., Lexpearl series manufactured by Japan Polyethylene Corporation, Umex series manufactured by Sanyo Chemical Industries, Ltd., Vestoplast series manufactured by Evonik Industries AG, Primacor series and AFFINITY series manufactured by The Dow Chemical Company, ADMER series manufactured by Mitsui Chemicals, Inc., and TOYO-TAC series manufactured by Toyobo Co., Ltd.

### (Polyvinyl Alcohol (B))

In the present invention, it is preferable that the resin layer contains a polyvinyl alcohol from the viewpoint of improving releasability. Polyvinyl alcohol is not particularly limited, and examples thereof include fully or partially saponified polymers of vinyl esters. The polyvinyl alcohol, by being contained in the resin layer, enhances the adhesion between the resin layer and the base film, and also improves the releasability between the resin layer and the adherend. The polyvinyl alcohol in the present invention preferably has water solubility for use as a liquid material as described later.

It is preferable that the polyvinyl alcohol has a saponification degree of 90% or more, more preferably 93% or more, from the viewpoint of the surface smoothness of the resin layer and the releasability at high temperatures.

The content of the polyvinyl alcohol is preferably 10 to 1000 parts by mass, more preferably 100 to 1000 parts by mass, further preferably 210 to 800 parts by mass, and particularly preferably 300 to 600 parts by mass relative to 100 parts by mass of the resin from the viewpoints of improving the releasability between the resin layer and the adherend and suppressing the transfer to the adherend after peeling.

Examples of the polyvinyl alcohol that can be used in the present invention include products such as "JP-15", "JT-05", "JL-05E", "JM-33", "JM-17", "JF-05", and "VC-10" manufactured by JAPAN VAM & POVAL CO., LTD., and "PVA-CST", "PVA-624", "PVA-203", "PVA-220", and "PVA-405" of "KURARAY POVAL" manufactured by KURARAY CO., LTD.

### (Crosslinking Agent (C))

In the present invention, from the viewpoint of imparting good releasability, it is necessary for the resin layer to contain a crosslinking agent along with the acid-modified polyolefin resin. By containing a crosslinking agent in the resin layer, the components of the resin layer undergo crosslinking, thereby improving releasability, enhancing the cohesive strength of the resin layer, reducing transferability to adherends, and improving water resistance.

The content of the crosslinking agent is preferably 1 to 20 parts by mass, more preferably 2 to 15 parts by mass, and further preferably 2 to 10 parts by mass, based on 100 parts by mass of the acid-modified polyolefin resin. If the content of the crosslinking agent is less than 1 part by mass, the resin layer tends to have weak cohesion, poor adhesion to the base film, and easily transfer to the adherend. On the other hand, if it exceeds 20 parts by mass, the resin layer may react with the adherend, resulting in poor releasability, and the liquid for forming the resin layer may thicken, leading to decreased stability.

As the crosslinking agent, a compound that has multiple functional groups capable of reacting with carboxyl groups within a molecule, or the like can be used. Examples thereof include a polyfunctional epoxy compound, a polyfunctional isocyanate compound, a polyfunctional aziridine compound, a carbodiimide group-containing compound, an oxazoline group-containing compound, a phenolic resin; and an amino resin such as an urea compound, a melamine resin, a benzoguanamine resin, or the like. One of these may be used alone, or two or more in combination. Among these, a polyfunctional isocyanate compound, a melamine resin, an urea compound, a polyfunctional epoxy compound, a carbodiimide group-containing compound, and an oxazoline group-containing compound are preferred, with a carbodiimide group-containing compound and an oxazoline group-containing compound being more preferred, and an oxazoline group-containing compounds being further preferred. By using the oxazoline group-containing compound, it is possible to obtain a laminated film with excellent releasability from an adherend and excellent adhesion to a base film. Additionally, these crosslinking agents may be used in combination.

As the polyfunctional epoxy compound, a polyepoxy compound, a diepoxy compound, or the like can be specifically used. Examples of the polyepoxy compound that can be used include sorbitol polyglycidyl ether, polyglycerol polyglycidyl ether, pentaerythritol polyglycidyl ether, diglycerol polyglycidyl ether, triglycidyl tris(2-hydroxyethyl)isocyanate, glycerol polyglycidyl ether, and trimethylolpropane polyglycidyl ether. Examples of the diepoxy compound that can be used include neopentyl glycol diglycidyl ether, 1,6-hexanediol diglycidyl ether, resorcinol diglycidyl ether, ethylene glycol diglycidyl ether, polyethylene glycol diglycidyl ether, propylene glycol diglycidyl ether, polypropylene glycol diglycidyl ether, and polytetramethylene glycol diglycidyl ether.

Examples of the polyfunctional isocyanate compound that can be used include tolylene diisocyanate, diphenylmethane-4,4'-diisocyanate, metaxylylene diisocyanate, hexamethylene-1,6-diisocyanate, 1,6-diisocyanatehexane, adduct of tolylene diisocyanate and hexanetriol, adduct of tolylene diisocyanate and trimethylolpropane, polyol-modified diphenylmethane-4,4'-diisocyanate, carbodiimide-modified diphenylmethane-4,4'-diisocyanate, isophorone diisocyanate, 1,5-naphthalene diisocyanate, 3,3'-bitolylene-4,4'-diisocyanate, 3,3'-dimethyl diphenylmethane-4,4'-diisocyanate, and metaphenylene diisocyanate. As the polyfunctional isocyanate compound, blocked isocyanate compounds in which the isocyanate groups are blocked with bisulfite salts and phenols, alcohols, lactams, oximes, active methylene compounds or the like containing sulfonic acid groups may also be used.

Examples of commercially available polyfunctional isocyanate compounds include "Basonat HW-100" manufactured by BASF SE.

Examples of the polyfunctional aziridine compound that can be used include N,N'-hexamethylene-1,6-bis-(1-aziridinecarboxamide) and trimethylolpropane-tri-β-aziridinylpropionate.

As for the carbodiimide group-containing compound, it is not particularly limited as long as it contains one or more carbodiimide groups in a molecule. The carbodiimide compound forms an ester at one carbodiimide moiety, with two carboxyl groups in the acid-modified portion of an acid-modified polyolefin resin to achieve cross-linking. For example, a compound having a carbodiimide group such as p-phenylene-bis(2,6-xylylcarbodiimide), tetramethylene-bis(t-butylcarbodiimide), or cyclohexane-1,4-bis(methylene-t-butylcarbodiimide), and polycarbodiimide, which is a polymer having a carbodiimide group, can be used. One of these may be used alone, or two or more in combination. Among these, polycarbodiimide is preferable due to the ease of handling.

Examples of commercially available polycarbodiimide include CARBODILITE series manufactured by NISSHINBO CHEMICAL INC. Specific examples include the water-soluble types "SV-02", "V-02", "V-02-L2", and "V-04"; the emulsion types "E-01" and "E-02"; the organic solution types "V-01", "V-03", "V-07", and "V-09"; and the solvent-free type "V-05".

As for the oxazoline group-containing compound, it is not particularly limited as long as it contains two or more oxazoline groups in a molecule. The oxazoline compound forms an amide ester in each of the two oxazoline moieties, with one carboxyl group in the acid-modified portion of an acid-modified polyolefin resin to achieve cross-linking. Such a polymer can be prepared by polymerizing addition-polymerizable oxazoline group-containing monomers alone or with other monomers. Examples of the addition-polymerizable oxazoline group-containing monomer include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, and 2-isopropenyl-5-ethyl-2-oxazoline. The addition-polymerizable oxazoline group-containing monomer may be used alone or in combination of two or more. Among these, 2-isopropenyl-2-oxazoline is suitable due to the industrial availability. The other monomers are not limited as long as they are copolymerizable with addition-polymerizable oxazoline group-containing monomers. Examples thereof include (meth)acrylic acid esters such as alkyl acrylates and alkyl methacrylates, in which the alkyl may be methyl, ethyl, n-propyl, isopropyl, n-butyl, isobutyl, t-butyl, 2-ethylhexyl, or cyclohexyl; unsaturated carboxylic acids such as acrylic acid, methacrylic acid, itaconic acid, maleic acid, fumaric acid, crotonic acid, styrene sulfonic acid and the salts thereof such as sodium salt, potassium salt, ammonium salt, and tertiary amine salt; unsaturated nitriles such as acrylonitrile and methacrylonitrile; unsaturated amides such as acrylamide, methacrylamide, N-alkyl acrylamide, N-alkyl methacrylamide, N,N-dialkyl acrylamide, and N,N-dialkyl methacrylate, in which the alkyl may be methyl, ethyl, n-propyl, isopropyl, n-butyl, isobutyl, t-butyl, 2-ethylhexyl, or cyclohexyl; vinyl esters such as vinyl acetate and vinyl propionate; vinyl ethers such as methyl vinyl ether and ethyl vinyl ether; α-olefins such as ethylene and propylene; halogen-containing α,β-unsaturated aliphatic monomers such as vinyl chloride, vinylidene chloride, and vinyl fluoride; α,β-unsaturated aromatic monomers such as styrene and α-methylstyrene. As the other monomers, these may be used alone or in combination of two or more. Among these, polymers containing an oxazoline group are preferred due to the ease of handling.

Examples of commercially available oxazoline group-containing polymers include EPOCROS series manufactured by NIPPON SHOKUBAI CO., LTD. Specific examples include the water-soluble types "WS-500" and "WS-700"; and the emulsion types "K-1010E", "K-1020E", "K-1030E", "K-2010E", "K-2020E", and "K-2030E".

Examples of the phenolic resin that can be used include a resol-type and/or novolac-type phenolic resin prepared from raw materials such as phenol, bisphenol A, alkylphenols, e.g., p-tert-butylphenol, octylphenol, or p-cumylphenol, p-phenylphenol, and cresol.

Examples of the urea resin that can be used include dimethylol urea, dimethylol ethylene urea, dimethylol propylene urea, tetramethylol acetylene urea, and 4-methoxy-5-dimethylpropylene urea dimethylol.

Melamine resin is a compound that contains, for example, an imino group, a methylol group, and/or an alkoxymethyl group (such as a methoxymethyl group and a butoxymethyl group) as a functional group in a molecule. Examples of the melamine resin that can be used include an imino-type methylated melamine resin, a methylol-type melamine resin, a methylol-type methylated melamine resin, and a fully alkylated methylated melamine resin. To accelerate the thermosetting of the melamine resin, it is preferable to use an acidic catalyst such as p-toluenesulfonic acid.

Examples of the benzoguanamine resin that can be used include trimethylolbenzoguanamine, hexamethylolbenzoguanamine, trismethoxymethylbenzoguanamine, and hexakis(methoxymethyl)benzoguanamine.

### (Compound (D))

The resin layer in the present invention can be formed using a liquid material for resin layer formation that contains compound (D) together with the resin component. By incorporating the compound (D) into the liquid material for forming a resin layer and forming the resin layer by a specific method, it is possible to achieve both flatness and slippability of the resin layer.

The compound (D) is at least one compound selected from the group consisting of an amphiphilic oligomer, acetylene glycol, and an ethylene oxide adduct of acetylene glycol.

The amphiphilic oligomer refers to an oligomer that possesses both a hydrophobic structure (also known as hydrophobic segment) and a hydrophilic structure (also known as hydrophilic segment) in a molecule.

Examples of the hydrophobic segment include, but are not particularly limited to, an alkyl group, an alkenyl group, an alkylphenyl group, a perfluoroalkyl group, and a perfluoropolyether group. These may be included alone or may be included in a structure of a combination of multiple segments.

Examples of the hydrophilic segment include, but are not particularly limited to, a polyoxyalkylene glycol such as polyethylene glycol and polypropylene glycol; and a polyhydric alcohol such as glycerin, sorbitol, sorbitan, polyglycerin, fructose, sucrose, glucose, and maltose.

Specific examples of the acetylene glycol include 2,5,8,11-tetramethyl-6-dodecyn-5,8-diol, 5,8-dimethyl-6-dodecyn-5,8-diol, 2,4,7,9-tetramethyl-5-decyn-4,7-diol, 4,7-dimethyl-5-decyn-4,7-diol, 2,3,6,7-tetramethyl-4-octyn-3,6-diol, 3,6-dimethyl-4-octyn-3,6-diol, 3,6-diethyl-4-octyn-3,6-diol, and 2,5-dimethyl-3-hexyn-2,5-diol.

Examples of the ethylene oxide adduct of acetylene glycol include the ethylene oxide adducts of the compounds listed as specific examples of the acetylene glycol.

The compound (D) is preferably one that has a solubility of 0.05 g or more in 100 g of water at 20°C, or one that disperses when 0.1 g of the compound (D) is added and stirred in 100 g of water at 20°C. If the solubility of the compound (D) is below 0.05 g, or if it does not disperse in water, it does not mix with the liquid material for resin layer formation and eventually separates over time. As a result, not only may the liquid material for resin layer formation exhibit inferior stability, but also the formed resin layer tends to compromise the appearance.

The content of compound (D) in the liquid material for resin layer formation is preferably 2 to 50 parts by mass, more preferably 3.5 to 30 parts by mass, and further preferably 5 to 25 parts by mass, based on 100 parts by mass of the acid-modified polyolefin resin (A). If the content of compound (D) in the liquid material for resin layer formation is less than 2 parts by mass, it may be difficult to obtain a resin layer surface with a developed interfacial area ratio (Sdr) of 0.025 to 0.304%, as determined by a non-contact surface profile measuring apparatus. On the other hand, if the content of compound (D) exceeds 50 parts by mass, the resin layer may exhibit reduced releasability, generate interference fringes, or show decreased flatness, resulting in a maximum height (Sz) not fulfilling the range of 0.01 to 0.50 µm.

Some type of the compound (D) in the liquid material for resin layer formation may volatilize during heat treatment following application to the base film, and may not remain in the formed resin layer.

Examples of commercially available products that can be used as the compound (D) in the present invention include, as the amphiphilic oligomer, POLYFLOW series "KL-900" manufactured by Kyoeisha Chemical Co., Ltd.; as the acetylene glycol, OLFINE series "D-10" manufactured by Nissin Chemical Industry Co., Ltd.; and as the ethylene oxide adduct of acetylene glycol, the OLFINE series "E1004", "E1006", and "E1010" and SURFYNOL series "420", "440", and "485" manufactured by Nissin Chemical Industry Co., Ltd.

In the present invention, the resin layer may contain a lubricant as long as it does not compromise the effects of the present invention. Examples of the lubricant include inorganic particles such as calcium carbonate, magnesium carbonate, calcium oxide, zinc oxide, magnesium oxide, silicon oxide, sodium silicate, aluminum hydroxide, iron oxide, zirconium oxide, barium sulfate, titanium oxide, tin oxide, antimony trioxide, carbon black, and molybdenum disulfide; organic particles such as acrylic cross-linked polymers, styrene cross-linked polymers, silicone resins, fluororesins, benzoguanamine resins, phenolic resins, nylon resins, polyethylene waxes; and surfactants.

### <Liquid Material for Resin Layer Formation>

In the present invention, it is preferable that a liquid medium constituting the liquid material for resin layer formation, which contains an acid-modified polyolefin resin (A), a crosslinking agent (C), and a compound (D), be an aqueous medium. The term "aqueous medium" refers to a solvent containing water and an amphiphilic organic solvent, with a water content of 2% by mass or more. The aqueous medium may consist of only water.

The amphiphilic organic solvent refers to an organic solvent in which the solubility of water in the organic solvent at 20°C is 5% by mass or more (the solubility of water in organic solvents at 20°C is described in literature such as the "Solvent Handbook" (Kodansha Scientific Ltd., 10th Edition, 1990)).

Specific examples of the amphiphilic organic solvent include alcohols such as methanol, ethanol, n-propanol, and isopropanol; ethers such as tetrahydrofuran and 1,4-dioxane; ketones such as acetone and methyl ethyl ketone; esters such as methyl acetate, n-propyl acetate, isopropyl acetate, methyl propionate, ethyl propionate, and dimethyl carbonate; ethylene glycol derivatives such as ethylene glycol-n-butyl ether; and other compounds including ammonia, organic amine compounds such as diethylamine, triethylamine, diethanolamine, triethanolamine, N,N-dimethylethanolamine, and N,N-diethylethanolamine, and lactams such as 2-pyrrolidone and N-methyl-2-pyrrolidone.

The solids concentration of the liquid material for resin layer formation can be appropriately selected based on the lamination conditions, the desired thickness and performance, or the like, and is not particularly limited. However, to adequately maintain the viscosity of the liquid material and to form a uniform resin layer, the solids concentration is preferably 2 to 30% by mass, more preferably 3 to 20% by mass.

The liquid material for resin layer formation may contain an antioxidant, an ultraviolet absorber, a lubricant, a colorant, and the like, as long as the performance of the liquid material for resin layer formation is not compromised.

### <Manufacturing of Laminated Film>

The method of manufacturing the laminated film of the present invention includes steps of applying a liquid material for resin layer formation onto a base film, and then drying and stretching the coated base film. To obtain a resin layer surface with the developed interfacial area ratio (Sdr) as defined in the present invention, it is necessary for the temperature of the liquid material for resin layer formation to be 20 to 40°C, preferably 25 to 35°C. If the liquid temperature during application is below 20°C, the liquid material for resin layer formation may become difficult to apply uniformly due to thickening, potentially resulting in an increased maximum height (Sz) of the resin layer surface. On the other hand, if the liquid temperature of the liquid material for resin layer formation exceeds 40°C during application, bumping is likely to occur during the drying of the resin layer, and the developed interfacial area ratio (Sdr) of the resin layer surface may increase.

As a method of applying the liquid material for resin layer formation onto a base film, known methods such as gravure roll coating, reverse roll coating, wire bar coating, lip coating, air knife coating, curtain flow coating, spray coating, dipping coating, and brush coating can be mentioned. The liquid material for resin layer formation is particularly effective in the case of gravure roll coating because it can suppress the occurrence of coating streaks.

The method of manufacturing the laminated film of the present invention includes a step of applying a liquid material for resin layer formation during the manufacturing process of a base film, and a step of drying and stretching the liquid material together with the base film. Furthermore, it is preferable to include steps of performing orientation stretching and heat setting process.

By applying the liquid material for resin layer formation during the manufacturing process of the base film, it is possible to form a resin layer while the degree of oriented crystallization on the surface of the base film remains low, thereby improving the adhesion between the base film and the resin layer. Furthermore, since the resin layer can be heat-treated at a higher temperature while the base film is kept under tension, it is possible to enhance releasability and residual adhesive strength without degrading the quality of the base film.

From the viewpoints of simplicity and operational reasons, it is preferable that, by adopting the sequential biaxial stretching method, the liquid material is applied to the base film that has been stretched in uniaxial direction, the base film on which the liquid material has been applied is then dried, and subsequently the base film is further stretched in the direction orthogonal to the aforementioned direction and undergoes heat treatment.

### <Properties of Resin Layer>

From the viewpoint of imparting slippability and suppressing transfer to the adherend, the laminated film of the present invention requires that the developed interfacial area ratio (Sdr) of the resin layer as determined by a non-contact surface profile measuring apparatus be 0.025% to 0.304%, preferably 0.03% to 0.30%, and more preferably 0.04% to 0.25%. If the developed interfacial area ratio (Sdr) of the surface of the resin layer is less than 0.025%, the air layer contained on the surface of the resin layer is very minimal, resulting in insufficient slippability. This can cause issues during film manufacturing processes such as winding, unwinding, and slitting, leading to scratches on the surface and deteriorating the appearance of the wound roll. Moreover, if the developed interfacial area ratio (Sdr) of the surface of the resin layer exceeds 0.304%, the surface irregularities of the resin layer increase, resulting in compromised flatness, thereby making it difficult to meet the flatness required by small electronic devices or the like.

On the other hand, it is preferable that the developed interfacial area ratio (Sdr) of the base film surface without a resin layer as determined by a non-contact surface profile measuring apparatus is 0.20% or more. If the developed interfacial area ratio (Sdr) of the base film surface without a resin layer is less than 0.20%, slippability is reduced, and the film may become difficult to process in various applications.

In the present invention, the surface of the resin layer constituting the laminated film is required to have a surface roughness parameter maximum height (Sz) of 0.01 to 0.50 µm, preferably 0.01 to 0.40 µm, and more preferably 0.01 to 0.20 µm, from the viewpoint of suppressing surface texture transfer to the adherend. By ensuring that the surface roughness of the resin layer falls within the aforementioned range, the resin layer is flattened, thereby preventing the transfer of coarse protrusions from the resin layer to the adherend.

The laminated film of the present invention, when measured after adhering an epoxy prepreg to the resin layer, preferably exhibits a peel strength between the resin layer and the epoxy prepreg of 0.01 to 0.5 N/cm, more preferably 0.01 to 0.35 N/cm, and further preferably 0.01 to 0.15 N/cm. If the peel strength exceeds 0.5 N/cm, the peel strength is considered too high, making it impractical for use as a release film.

The laminated film of the present invention, when measured after adhering an acrylic adherend as an adhesive material to the resin layer, preferably exhibits a peel strength between the resin layer and the adherend of 3.0 N/cm or less, more preferably 2.8 N/cm or less, and further preferably 2.6 N/cm or less. If the peel strength exceeds 3.0 N/cm, the peel strength is considered too high, making it impractical for use as a release film.

In the present invention, the thickness of the resin layer is preferably 0.01 to 1 µm, more preferably 0.03 to 0.7 µm, and further preferably 0.05 to 0.5 µm. If the thickness of the resin layer is less than 0.01 µm, sufficient releasability cannot be obtained. If the thickness of the resin layer exceeds 1 µm, the resin layer is more likely to transfer to the adherend, and the cost will increase, which is considered undesirable.

### Examples

Hereinafter, the present invention will be specifically described by way of examples, but the present invention is not limited to these. The properties of laminated film were measured by the methods described below.

### (1) Flatness (developed interfacial area ratio (Sdr), maximum height (Sz))

Using a non-contact surface profile measuring apparatus (VS1800 manufactured by Hitachi High-Tech Corporation), in accordance with ISO 25178, the developed interfacial area ratio (Sdr) and the maximum height (Sz) were measured for a resin layer surface, while the developed interfacial area ratio (Sdr) was measured for a base film surface without a resin layer. Measurements were conducted at ten locations on each layer surface, and the average value was taken as the measurement result.

### (Measurement Conditions)

- Objective lens: 50×
- Measurement area: 112 µm × 112 µm
- Measurement mode: WAVE

### (Analysis Conditions)

- Surface correction: 4th order

### (2) Slippability (Dynamic Friction Coefficient (µd))

Using a tensile tester (EZ-LX manufactured by Shimadzu Corporation), the dynamic friction coefficient (µd) between the resin layer surface and the base film surface without a resin layer was determined in accordance with JIS K7125, and evaluated based on the following criteria. Measurements were conducted at five locations, and the average value was taken as the measurement result.
Excellent: less than 0.25
Good: 0.25 or more, and less than 0.30
Fair: 0.30 or more, and less than 0.40
Poor: 0.40 or more

### (3) Releasability (Peel Strength) for Epoxy Prepreg

Both sides of a 60 mm × 100 mm epoxy prepreg (EI-6765 manufactured by Sumitomo Bakelite Co., Ltd.) were sandwiched with the resin layer side of an obtained laminated film, and heated in a vacuum press machine at 1.07 kPa (8 Torr) from 30°C to 150°C at a rate of 15°C/min, maintained at 150°C for 22 minutes, and then further heated to 190°C at a rate of 5°C /min, followed by application of a pressure of 5 kg/cm² for 10 minutes, and then held at 190°C under a pressure of 15 kg/cm² for 70 minutes. Subsequently, the resultant was cooled to room temperature to obtain a sample.

The peel strength between the cured epoxy prepreg and the laminated film of the obtained sample was measured under the conditions of a peel angle of 180 degrees and a peel speed of 300 mm/min, using a tensile tester (Autograph AGX-V manufactured by Shimadzu Corporation) in a constant temperature room at 23°C. The measurements were conducted at five locations, and the average value was taken as the measurement result.

### (4) Releasability Against Acrylic Adhesive (Peel Strength)

An acrylic adhesive tape with a width of 50 mm and a length of 150 mm (No. 31B/acrylic adhesive, manufactured by Nitto Denko Corporation) was pressed onto the resin layer side of an obtained laminated film using a rubber roll to prepare a sample. The sample was sandwiched in the form of metal plate/rubber plate/sample/rubber plate/metal plate, subjected to a load of 2 kPa, and left in an atmosphere at 70°C for 20 hours. Subsequently, the resultant was cooled for at least 30 minutes to return to room temperature to obtain a sample for peel strength measurement.

The peel strength between the acrylic adhesive tape and the laminated film of the sample for peel strength measurement was measured in a constant temperature room at 23°C using a tensile tester (Autograph AGX-V manufactured by Shimadzu Corporation) under conditions of a peel angle of 180 degrees and a peel speed of 300 mm/min. The measurements were conducted at five locations, and the average value was taken as the measurement result.

### (5) Transfer to Adherend (Maximum Height of Adherend Surface After Peeling (Sz))

An epoxy resin composition was obtained by mixing 100 parts by mass of bisphenol-type epoxy resin (jER828 manufactured by Mitsubishi Chemical Corporation), 50 parts by mass of acid anhydride mainly composed of 4-methylhexahydrophthalic anhydride (MH-700 manufactured by New Japan Chemical Co., Ltd.), and 2 parts by mass of a curing accelerator (U-CAT18X, manufactured by Sanapro Corporation). The obtained epoxy resin composition was applied to the resin layer side of an obtained laminated film using a Meyer bar so that a thickness after drying was 20 µm, and then dried at 160°C for 30 minutes to obtain a laminate in which the epoxy resin composition was layered.

Subsequently, peeling was conducted between the epoxy resin composition and the laminated film. The maximum height (Sz) was measured on the resin layer surface side of the epoxy resin composition using the method described in the aforementioned "(1) Flatness", and the average value was calculated.

It should be noted that the maximum height (Sz) of the surface of the epoxy resin composition after peeling is preferably 0.40 µm or less, more preferably 0.30 µm or less, and further preferably 0.10 µm or less.

To prepare a liquid material for resin layer formation, an acid-modified polyolefin resin and an aqueous dispersion were manufactured by the following method.

### <Manufacture of Acid-Modified Polyolefin Resin A-1>

280 g of a propylene-ethylene copolymer (propylene/ethylene = 99/1 in mass ratio) was heat-melted in a four-necked flask under a nitrogen atmosphere. Subsequently, while maintaining the system temperature at 170°C, 32.0 g of maleic anhydride as an unsaturated carboxylic acid and 6.0 g of dicumyl peroxide as a radical generator were added thereto under stirring over one hour each, and then the mixture was reacted for one hour. After completion of the reaction, the resulting reaction product was introduced into a large amount of acetone to precipitate a resin. The resin was then washed several times with acetone to remove unreacted maleic anhydride, then subjected to vacuum drying in a vacuum dryer to obtain an acid-modified polyolefin resin A-1 (acid modification rate of 2.3%, melting point of 145°C).

### <Manufacture of Acid-Modified Polyolefin Resin A-2>

An acid-modified polyolefin resin A-2 (acid modification rate of 2.0%, melting point of 105°C) was obtained in a similar manner to A-1, except that the propylene-ethylene copolymer (propylene/ethylene = 99/1 by mass ratio) was replaced with an ethylene-ethyl acrylate copolymer (ethylene/ethyl acrylate = 93/7 by mass ratio) in the manufacture of the acid-modified polyolefin resin A-1.

### <Manufacture of Acid-Modified Polyolefin Resin A-3>

70 g of an ethylene-1-octene copolymer (ethylene/1-octene = 61.9/38.1 by mass ratio) and 14 g of maleic anhydride as an unsaturated carboxylic acid were dissolved by heating in 320.4 g of xylene in a four-neck flask under a nitrogen atmosphere, maintaining the system temperature at 140°C and continuing stirring. In another flask, 4.2 g of dicumyl peroxide as a radical generator and 15.6 g of xylene were added to form a homogeneous solution, after which the system was purged with nitrogen. A xylene solution containing the ethylene-octene copolymer and maleic anhydride was mixed with a xylene solution of dicumyl peroxide over 30 minutes, and the mixture was stirred continuously for 5 hours under a nitrogen atmosphere while maintaining the system temperature at 140°C. Subsequently, the solution in the four-neck flask was cooled to 50°C, and the entire resulting solution was introduced into a large amount of methanol to precipitate a resin. The resin was then washed several times with acetone to remove unreacted maleic anhydride, then subjected to vacuum drying in a vacuum dryer to obtain an acid-modified polyolefin resin A-3 (acid modification rate of 2.2%).

### <Manufacture of Acid-Modified Polyolefin Resin A-4>

An acid-modified polyolefin resin A-4 (acid modification rate of 6.3%, melting point of 135°C) was obtained in a similar manner to A-1, except that the propylene-ethylene copolymer (propylene/ethylene = 99/1 by mass ratio) was replaced with a propylene-1-butene-ethylene terpolymer (propylene/1-butene/ethylene = 64.8/23.9/11.3 by mass ratio) in the manufacture of the acid-modified polyolefin resin A-1.

### The composition of the obtained acid-modified polyolefin resins A-1 to A-4 are shown in Table 1.

**[Table 1]**

| Type | Composition of acid-modified polyolefin resin (% by mass) | | | | | |
|---|---|---|---|---|---|---|
| | Ethylene | Propylene | 1-Butene | 1-Octene | Ethyl acrylate | Maleic anhydride |
| A-1 | 1.0 | 96.7 | | | | 2.3 |
| A-2 | 91.0 | | | | 7.0 | 2.0 |
| A-3 | 60.6 | | | 37.2 | | 2.2 |
| A-4 | 10.6 | 60.7 | 22.4 | | | 6.3 |

### <Manufacture of Aqueous Dispersion of Acid-Modified Polyolefin Resin A-1>

Using a stirrer equipped with a pressure-resistant, sealable 1-liter glass container with a heater, 60.0 g of the acid-modified polyolefin resin A-1 manufactured by the aforementioned method, 45.0 g of ethylene glycol-n-butyl ether (boiling point of 171°C), 6.9 g of N,N-dimethylethanolamine (boiling point of 134°C, at an equivalent amount of 1.0 relative to carboxyl groups of maleic anhydride units in the resin), and 188.1 g of distilled water were charged into the glass container, and stirred at a stirring blade rotation speed of 300 rpm. As a result, no resin precipitation was observed at the bottom of the container, and the resin was confirmed to remain in a suspended state. While maintaining this state, a power supply to the heater was turned on after 10 minutes, and heating commenced. Then the system temperature was maintained at 140°C, and stirring was continued for an additional 60 minutes. Subsequently, air cooling was applied, and the mixture was stirred at a rotation speed of 300 rpm while being cooled to room temperature (about 25°C). Furthermore, pressure filtration using a 300-mesh stainless steel filter (wire diameter 0.035 mm, plain weave) at an air pressure of 0.2 Mpa was performed to obtain a uniform aqueous dispersion of the acid-modified polyolefin resin A-1 (solids concentration of 25% by mass). Notably, there was almost no residual resin on the filter.

### <Manufacture of Aqueous Dispersion of Acid-Modified Polyolefin Resin A-2>

An aqueous dispersion of the acid-modified polyolefin resin A-2 (solids concentration of 25% by mass) was obtained by the same method as the method of manufacturing the aqueous dispersion of A-1, except for changing the acid-modified polyolefin resin used to A-2.

### <Manufacture of Aqueous Dispersion of Acid-Modified Polyolefin Resin A-3>

Using a stirrer equipped with a pressure-resistant, sealable 1-liter glass container with a heater, 30.0 g of the acid-modified polyolefin resin A-3 manufactured by the aforementioned method, 90.0 g of tetrahydrofuran, 15.0 g of triethylamine, 2.4 g of 2-dimethylaminoethanol, and 165.0 g of distilled water were charged into the glass container, and stirred at a stirring blade rotation speed of 300 rpm. While maintaining this state, a power supply to the heater was turned on after 10 minutes, and heating commenced. Then the system temperature was maintained at 120°C, and stirring was continued for an additional 60 minutes. Subsequently, it was air-cooled to room temperature (about 25°C) while stirring, and the entire resulting dispersion was transferred to 1-liter eggplant flask. The eggplant flask was immersed in a hot-water bath heated to 60°C while performing solvent removal under reduced pressure using an evaporator, resulting in removal of 74 g of aqueous medium. Subsequently, 93.6 g of distilled water was added to the dispersion in the eggplant flask, which was then immersed in a hot-water bath heated to 60°C while performing solvent removal under reduced pressure using an evaporator, resulting in removal of 82 g of aqueous medium. After cooling, the dispersion in the eggplant flask was subjected to pressure filtration using a 300-mesh stainless steel filter (wire diameter of 0.035 mm, plain weave) at an air pressure of 0.2 Mpa to obtain a uniform aqueous dispersion of the acid-modified polyolefin resin A-3 (solids concentration of 12.5% by mass).

### <Manufacture of Aqueous Dispersion of Acid-Modified Polyolefin Resin A-4>

An aqueous dispersion of the acid-modified polyolefin resin A-4 (solids concentration of 25% by mass) was obtained by the same method as the method of manufacturing the aqueous dispersion of A-1, except for changing the acid-modified polyolefin resin used to A-4.

For the preparation of a liquid material for resin layer formation, the following aqueous solution was used as polyvinyl alcohol (B).
B-1: JT-05 manufactured by JAPAN VAM & POVAL CO., LTD., saponification rate 94.5%, degree of polymerization 500, solids concentration 8.0%
B-2: VC-10 manufactured by JAPAN VAM & POVAL CO., LTD., saponification rate 99.3%, degree of polymerization 1000, solids concentration 8.0%

The following was used as crosslinking agent (C).
C-1: Oxazoline group-containing compound (EPOCROS WS-700 manufactured by NIPPON SHOKUBAI CO., LTD., solids concentration of 25% by mass)
C-2: Carbodiimide group-containing compound (CARBODILITE V-02-L2 manufactured by NISSHINBO CHEMICAL INC., solids concentration of 40% by mass)

The following was used as compound (D).
D-1: Amphiphilic Oligomer (POLYFLOW KL-900 manufactured by Kyoeisha Chemical Co., Ltd.)
D-2: Acetylene Glycol (OLFINE D-10 manufactured by Nissin Chemical Industry Co., Ltd.)
D-3: Ethylene Oxide Adduct of Acetylene Glycol (OLFINE E1010 manufactured by Nissin Chemical Industry Co., Ltd.)
D-4: Modified Silicone (POLYFLOW KL-401 manufactured by Kyoeisha Chemical Co., Ltd.)

The polyethylene terephthalate that constitutes the base film was manufactured by the following method.

### <Polyethylene Terephthalate P-1>

Terephthalic acid and ethylene glycol were polymerized by a standard method with antimony oxide as a catalyst to obtain melt-polymerized polyethylene terephthalate P-1 that was substantially free of particles.

### <Polyethylene Terephthalate P-2>

Melt-polymerized polyethylene terephthalate P-2 was obtained by adding silica particles with an average particle diameter of 2.3 µm in an amount of 0.08% by mass based on polyethylene terephthalate during the polymerization of P-1.

### Example 1

### <Preparation of Liquid Material for Resin Layer Formation>

An aqueous dispersion of acid-modified polyolefin resin A-1, an aqueous solution of polyvinyl alcohol B-1, an aqueous solution of oxazoline group-containing compound C-1 as a crosslinking agent, and compound D-1 were mixed such that the solid content of each was 100 parts by mass, 300 parts by mass, 5 parts by mass, and 20 parts by mass, respectively. The mixture was then adjusted with water to achieve a final solids concentration of 7% by mass, thereby obtaining a liquid material for resin layer formation.

### <Manufacturing of Laminated Film>

Polyethylene terephthalate P-1 was fed into extruder 1 (screw diameter: 50 mm), and polyethylene terephthalate P-2 was fed into extruder 2 (screw diameter: 65 mm) and each melted at 280°C. Subsequently, the respective molten materials were combined into a two-layer laminate before reaching a T-die outlet, with a layer thickness ratio (P layer consisting of P-1/S layer consisting of P-2) of 33/5, resulting in a total thickness of 600 µm. The laminated molten material was extruded from the T-die outlet of a multilayer die and rapidly cooled in close contact with a casting drum by T-die method combined with electrostatic pinning process, forming an unstretched film with a thickness of 600 µm.

Subsequently, this unstretched film was stretched 3.5 times using longitudinal stretching rolls heated to 90°C.

On one side of the longitudinally stretched film (the surface of the P layer consisting of polyethylene terephthalate P-1), the liquid material for resin layer formation at a liquid temperature of 30°C was applied using a reverse gravure coater at a coating amount of 10 g/m² (in terms of WET), and the longitudinally stretched film on which the liquid material for resin layer formation was applied was dried and stretched 4.5 times in a transverse stretching tenter at 120°C, then subjected to heat treatment at 230°C for 10 seconds, subsequently cooled, and wound. The thickness of the obtained laminated film was 38 µm, and the thickness of the resin layer was approximately 0.10 µm. On the other hand, the developed interfacial area ratio (Sdr) of the base film surface without a resin layer was 0.33.

### Examples 2 to 19, and Comparative Examples 2 to 4, 6 to 8, 10, and 12

A laminated film was obtained in the same manner as in Example 1, except for changing the layer structure of the base film, the composition of the liquid material for resin layer formation, and the liquid temperature during application as specified in Table 2.

### Comparative Example 1

Polyethylene terephthalate P-1 was fed into extruder 1 (screw diameter: 50 mm), and polyethylene terephthalate P-2 was fed into extruder 2 (screw diameter: 65 mm) and each melted at 280°C. Subsequently, the respective molten materials were combined into a three-layer laminate before reaching a T-die outlet of a multilayer die, with a layer thickness ratio (S layer consisting of P-2/P layer consisting of P-1/S layer consisting of P-2) of 5/28/5, resulting in a total thickness of 600 µm. The laminated molten material was extruded from the T-die outlet of the multilayer die and rapidly cooled in close contact with a casting drum by T-die method combined with electrostatic pinning process, forming an unstretched film with a thickness of 600 µm.

Subsequently, this unstretched film was stretched 3.5 times using longitudinal stretching rolls heated to 90°C.

Then, a laminated film was obtained in the same manner as in Example 1, except for applying a liquid material for resin layer formation on one side of the longitudinally stretched film.

### Comparative Examples 5, 9, and 11

A laminated film was obtained in the same manner as in Comparative Example 1, except for changing the composition of the liquid material for resin layer formation as specified in Tables 2 to 4.

The results of various evaluations conducted on the laminated films obtained from the examples and comparative examples are shown in Tables 2 to 4.

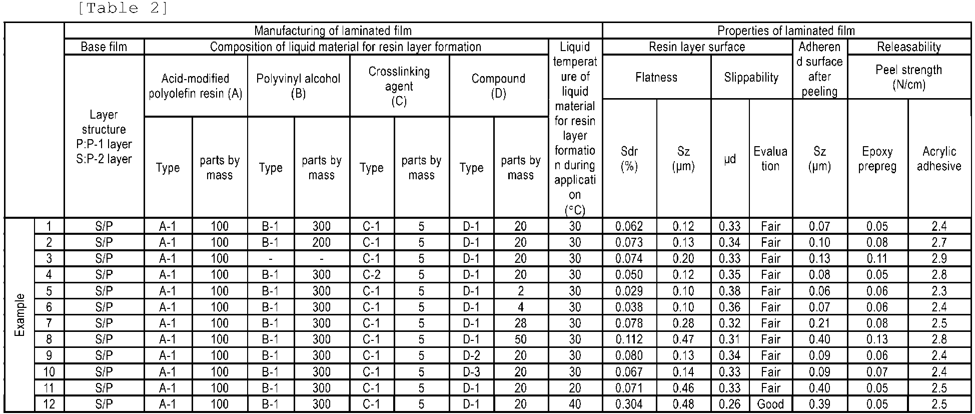

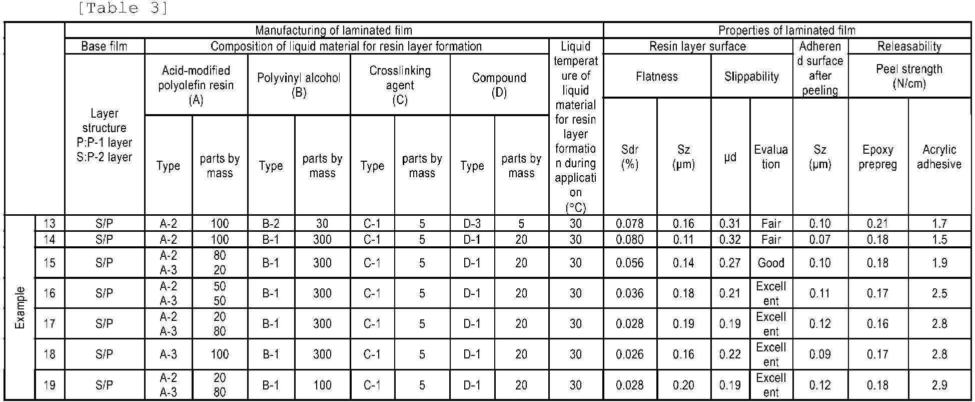

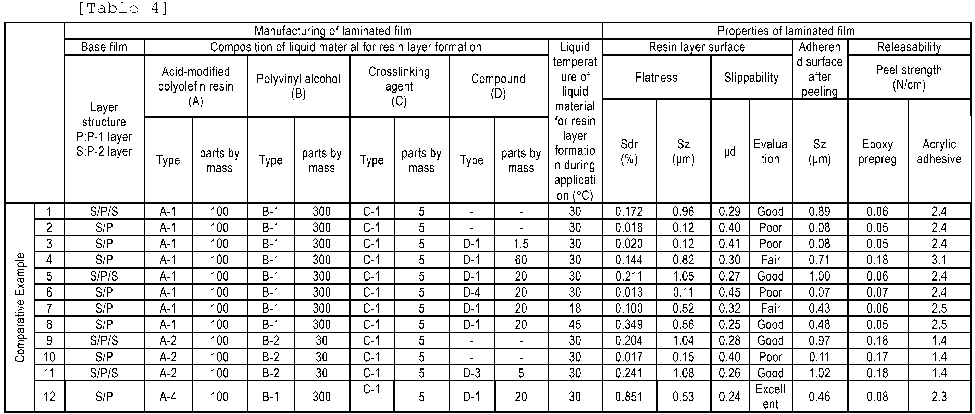

The resin layers of the laminated films of Examples 1 to 19 exhibited values for the developed interfacial area ratio (Sdr) and the maximum height (Sz) that fell within the range specified by the present invention, demonstrated excellent slippability, resulting in good winding roll formation, and achieved a flat surface profile and good releasability.

In Comparative Examples 1, 5, 9, and 11, the resin layer of the laminated film was formed on the S layer containing particles of the base film of multilayer structure. Consequently, the maximum height (Sz) fell outside the range specified in the present invention, resulting in inferior flatness and higher maximum height (Sz) of the adherend surface after peeling.

In Comparative Examples 2, 3, and 10, the resin layer of the laminated film was formed on the P layer, which did not contain particles, of the base film of multilayer structure. The maximum height (Sz) fell within the range specified by the present invention, resulting in excellent flatness. However, since the resin layer was formed with the liquid material for resin layer formation that contained little or no compound (D), the developed interfacial area ratio (Sdr) fell outside the range specified by the present invention, resulting in inferior slippability.

The resin layers of laminated films in other comparative examples also had Sdr and Sz values outside the ranges specified in the present invention, resulting in inferior slippability and flatness.

## Claims

1. A laminated film comprising: a base film; and a resin layer provided on at least one surface of the base film, wherein
a base film surface on which the resin layer is provided is substantially free of particles,
the resin layer contains an acid-modified polyolefin resin (A) and a crosslinking agent (C), and
a developed interfacial area ratio (Sdr) and a maximum height (Sz) in a surface of the resin layer measured by a non-contact surface profile measuring apparatus are 0.025 to 0.304% and 0.01 to 0.50 µm, respectively.

2. The laminated film according to claim 1, wherein an olefin component of the acid-modified polyolefin resin (A) contains propylene or 1-octene.

3. The laminated film according to claim 2, wherein a content of propylene in the olefin component is 70% by mass or more.

4. The laminated film according to claim 2, wherein a content of 1-octene in the olefin component is 15% by mass or more.

5. A laminated film according to any one of claims 1 to 4, wherein a peel strength between the resin layer and an epoxy prepreg is 0.5 N/cm or less.

6. A method of manufacturing the laminated film according to any one of claims 1 to 5, the method comprising:
applying a liquid material for resin layer formation onto a base film, wherein the liquid material contains an acid-modified polyolefin resin (A), a crosslinking agent (C), and at least one compound (D) selected from the group consisting of an amphiphilic oligomer, acetylene glycol, and an ethylene oxide adduct of acetylene glycol, and has a liquid temperature of 20 to 40°C; and
drying and stretching the base film to which the liquid material for resin layer formation has been applied.

7. The method of manufacturing the laminated film according to claim 6, wherein a content of the compound (D) in the liquid material for resin layer formation is 2 to 50 parts by mass based on 100 parts by mass of the acid-modified polyolefin resin (A).
